# EUROPÄISCHE PATENTSCHRIFT

(11) **EP 3 417 207 B1**
(45) Veröffentlichungstag und Bekanntmachung des Hinweises auf die Patenterteilung: **24.08.2022**
(21) Anmeldenummer: 17705102.6
(22) Anmeldetag: 13.02.2017
(51) Int. Cl.: F23G 7/06, F26B 23/02, F23C 7/00, F23C 9/00

(54) **BRENNEREINHEIT UND VORRICHTUNG ZUM TEMPERIEREN VON GEGENSTÄNDEN**
BURNER UNIT AND DEVICE FOR THE TEMPERATURE CONTROL OF OBJECTS
UNITÉ BRÛLEUR ET DISPOSITIF DE MISE EN TEMPÉRATURE D'OBJETS

(30) Priorität: 17.02.2016 DE 102016001893
(43) Veröffentlichungstag der Anmeldung: 26.12.2018
(73) Patentinhaber: Eisenmann Environmental Technology GmbH, 71032 Böblingen (DE)
(72) Erfinder: KATEFIDIS, Apostolos, 71116 Gärtringen (DE)
(74) Vertreter: Ostertag & Partner Patentanwälte mbB
(86) Internationale Anmeldenummer: PCT/EP2017/053183
(87) Internationale Veröffentlichungsnummer: WO 2017/140631

(56) Entgegenhaltungen:
- WO-A1-2014/112725
- DE-A1- 1 910 115
- DE-A1- 2 511 171
- DE-A1- 4 228 454
- DE-A1- 19 850 958
- DE-A1-102011 119 436
- US-A- 3 817 685
- US-B1- 6 383 462

## Beschreibung

Die Erfindung betrifft eine Brennereinheit, insbesondere zum Verbrennen von Abluft, mit
a) einer Brennkammer, in welcher Rauchgase entstehen;
b) einem Gasbrenner, welchem über eine Brenngasleitung Brenngas und über eine Brennerluftleitung Brennerluft, insbesondere als Brennerluft dienende Abluft, zuführbar ist;
c) einer Einrichtung, durch welche die Brennerluft in Primärluft und Sekundärluft geteilt wird;
d) einer Mischzone, in welcher die Primärluft mit dem Brenngas zu einem Primärluft/Brenngas-Gemisch vermischt wird, wobei das Primärluft/BrenngasGemisch der Brennkammer zugeführt wird;
e) einer Rauchgasrückführung, welche einen Durchströmungsraum umfasst, der mit der Brennkammer verbunden ist, und in welchem die Sekundärluft mit in der Brennkammer entstandenen Rauchgasen zu einem Sekundärluft/Rauchgas-Gemisch vermischt wird;
f) einer Einrichtung, mittels welcher das Sekundärluft/Rauchgas-Gemisch dem Primärluft/Brenngas-Gemisch in der Brennkammer zugeführt wird.

Außerdem betrifft die Erfindung eine Vorrichtung zum Temperieren von Gegenständen, insbesondere zum Trocknen von beschichteten Fahrzeugkarosserien, mit
a) einem Temperiertunnel, welcher in einem Gehäuse untergebracht ist und wenigstens einen Tunnelabschnitt definiert, der wenigstens einen Luftauslass und wenigstens einen Lufteinlass umfasst;
   wobei
b) dem Tunnelabschnitt ein Heizaggregat zugeordnet ist, in welchem mittels einer Brennereinheit ein heißes Primärgas erzeugbar ist.

Eine derartige Brennereinheit und eine derartige Vorrichtung zum Temperieren von Gegenständen sind aus der DE 10 2011 119 436 A1 bekannt. Weitere Brennereinheiten beschreiben die WO 2014/112725 A1, die US 3,817,685 A, die DE 25 11 171 A1 und die DE 198 50 958 A1.

Nachfolgend wird die Erfindung am Beispiel von Fahrzeugkarosserien als Gegenstände beschrieben, die Erfindung betrifft aber auch Vorrichtungen für andere Gegenstände, die in einem Produktionsprozess temperiert werden müssen. Wenn vorliegend von "Temperieren" gesprochen ist, so ist hiermit die Herbeiführung einer bestimmten Temperatur des Gegenstandes gemeint, die dieser zunächst noch nicht besitzt. Es kann sich um eine Temperaturerhöhung oder eine Temperaturverringerung handeln. Unter einer "temperierten Luft" wird eine solche verstanden, welche die zur Temperierung des Gegenstandes erforderliche Temperatur besitzt.

Ein in der Automobilindustrie häufiger Fall des Temperierens, nämlich des Erwärmens, von Fahrzeugkarosserien ist der Vorgang des Trocknens von feuchten Fahrzeugkarosserien oder des Trocknens der Beschichtung einer Fahrzeugkarosserie, handele es sich dabei nun um einen Lack oder einen Klebstoff oder dergleichen. Entsprechend können auch andere feuchte Gegenstände als Fahrzeugkarosserien oder die Beschichtung von anderen Gegenständen getrocknet werden. Die nachfolgende Beschreibung der Erfindung im Detail erfolgt am Beispiel eines solchen Trockners für Fahrzeugkarosserien.

Wenn vorliegend von "Trocknen" die Rede ist, so sind damit alle Vorgänge gemeint, bei denen die Beschichtung der Fahrzeugkarosserie, insbesondere ein Lack, zum Aushärten gebracht werden kann, sei dies nun durch Austreiben von Lösemitteln oder durch Vernetzung der Beschichtungssubstanz.

Vom Markt her bekannte Vorrichtungen der eingangs genannten Art werden zum Trocknen von frisch lackierten Fahrzeugkarosserien verwendet und werden geheizt, indem unter anderem Luft aus gegenüber der Gesamtlänge des Trockentunnels kurzen Tunnelabschnitten abgesaugt, in einem Heizaggregat mittels eines Wärmetauschers aufgeheizt und dem entsprechenden Tunnelabschnitt wieder in einem Kreislauf zugeführt wird.

Beim Trocknen von frisch lackierten Fahrzeugkarosserien ist die dem Tunnelabschnitt entnommene Luft hauptsächlich mit Lösemittel beladen, welches beim Trocknungsvorgang freigesetzt wird. In dieser Luft finden sich außerdem beim Trocknen der Fahrzeugkarosserie frei werdende Beschichtungsbestandteile; nachfolgend wird der Einfachheit halber dennoch weitgehend nur von Abluft gesprochen.

Die zum Betreiben der Brennereinheit notwendige Brennerluft wird bei einer ersten Art von bekannten Vorrichtungen über ein separates verdichtendes Gebläse aus der Umgebung entnommen. Somit muss die Brennerluft von der Umgebungstemperatur auf die Brennertemperatur aufgeheizt werden und wird der Umgebung als saubere Luft entnommen, welche bei ihrer Verwendung verunreinigt wird und vor der Rückgabe an die Umgebung gegebenenfalls aufbereitet werden kann.

Bei einer zweiten Art von bekannten Vorrichtungen ist eine Brennerversorgungseinrichtung vorhanden, mittels welcher der Brennereinheit des Heizaggregats Abluft aus dem Tunnelabschnitt als Brennerluftstrom zur Erzeugung des Primärgases zu der Brennereinheit zuführbar ist.

Unabhängig davon, ob eine solche Brennereinheit in einer Vorrichtung zum Temperieren von Gegenständen verwendet wird oder nicht, ist es in allen Fällen wünschenswert, dass die Brennereinheit mit guten Emissionswerten und insbesondere mit möglichst geringen CO- und Stickoxid (NOx)-Werten arbeitet. Die wird bei bekannten Brennereinheiten der eingangs genannten Art insbesondere durch die Rauchgasrückführung erreicht.

Es ist nun Aufgabe der Erfindung, eine Brennereinheit und eine Vorrichtung der eingangs genannten Art bereitzustellen, bei welchen besonders gute Emissionswerte erzielt werden.

Diese Aufgabe wird bei einer Brennereinheit der eingangs genannte Art dadurch erreicht, dass
g) die Innenmantelflächen des Durchströmungsraumes in Strömungsrichtung ein Coanda-Profil ausbilden;
h) der Durchströmungsraum als Ringraum ausgebildet ist, der einen Kernbereich der Mischzone der Brennkammer umgibt, wobei die Primärluft mit dem Brenngas in dem Kernbereich vermischt wird;
i) der Ringraum eine Venturi-Ringdüse bildet, wobei die Einrichtung, mittels welcher das Sekundärluft/Rauchgas-Gemisch dem Primärluft/Brenngas-Gemisch in der Brennkammer zugeführt wird, diese Venturi-Düse umfasst.

Durch den Coanda-Effekt gibt es hohe Strömungsgeschwindigkeiten und dadurch am Einlass des Durchströmungsraumes einen effektiven Unterdruck, so dass das Rauchgas wiederum mit hoher Geschwindigkeit in den Durchströmungsraum einund durch diesen hindurch strömt. Durch diese erhöhten Strömungsgeschwindigkeiten wird die Gesamteffektivität der Brennereinheit verbessert.

Durch den Durchströmungsraum wird eine effektive Durchmischung der Strömungen in der Brennkammer erhalten. Die Durchmischung von Primärluft/Brenngas und von Sekundärluft/Rauchgas erfolgt radial nebeneinander in voneinander getrennten Räumen. Die beiden Gemische werden erst hiernach zusammengebracht, wobei sie mit hohen Geschwindigkeiten strömen.

Die Strömungsgeschwindigkeit des resultierenden Sekundärluft/Rauchgas-Gemisches wird nochmals erhöht, indem der Ringraum eine Venturi-Ringdüse bildet und die Einrichtung, mittels welcher das Sekundärluft/Rauchgas-Gemisch dem Primärluft/Brenngas-Gemisch in der Brennkammer zugeführt wird, diese Venturi-Düse umfasst.

Es ist bautechnisch günstig, wenn die Einrichtung, durch welche die Brennerluft in Primärluft und Sekundärluft aufgeteilt wird, durch die radial innere Ringwand des Ringraumes ausgebildet ist

Es ist besonders vorteilhaft, wenn eine Dralleinrichtung vorgesehen ist, durch welche Primärluft vor dem Eintritt in den Kernbereich in Drall versetzbar ist und/oder durch welche Sekundärluft vor dem Eintritt in den Ringraum in Drall versetzbar ist. Wenn die Primärluft oder die Sekundärluft einen Drall aufweist, erfolgt die Durchmischung mit dem Brenngas bzw. dem Rauchgas besonders effektiv.

Die Dralleinrichtung ist vorzugsweise als Flügelring ausgebildet.

Dabei ist es günstig, wenn der Flügelring die Brennerluftleitung mit dem Ringraum und mit dem Kernbereich der Mischzone verbindet. Anders ausgedrückt sitzt der Flügelring in diesem Fall überlappend vor der Trennwand zwischen dem Kernbereich der Mischzone und dem Ringraum.

Die oben genannte Aufgabe wird bei der Vorrichtung dadurch gelöst, dass die Brennereinheit eine Brennereinheit mit einigen oder allen der oben genannten Merkmale ist.

Ausführungsbeispiele der Erfindung werden nachfolgend anhand der Zeichnungen näher erläutert. In diesen zeigen
- Figur 1: eine schematische Darstellung eines Trockners mit einem Heizaggregat,
- Figur 2: einen schematischen Längsschnitt eines Heizaggregates gemäß einem ersten Ausführungsbeispiel;
- Figur 3: einen Schnitt des Heizaggregates von Figur 2 entlang der dortigen Schnittlinie III-III;
- Figur 4: einen Schnitt des Heizaggregates von Figur 2 entlang der dortigen Schnittlinie IV-IV;
- Figur 5: einen schematischen Längsschnitt eines Heizaggregates gemäß einem zweiten Ausführungsbeispiel;
- Figur 6: einen Schnitt des Heizaggregates von Figur 5 entlang der dortigen Schnittlinie VI-VI.

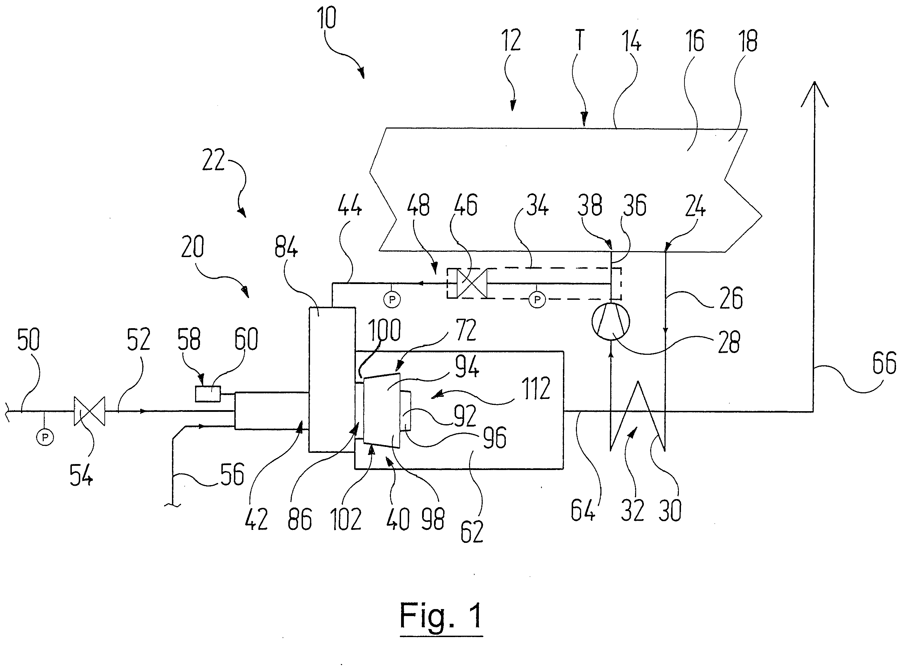

In Figur 1 bezeichnet 10 eine Vorrichtung zum Temperieren von Gegenständen, welche stark schematisch als Trockner 12 veranschaulicht ist. Der Trockner 12 umfasst ein wärmeisoliertes Trocknergehäuse 14, in dem als Temperiertunnel 16 ein Trockentunnel 18 untergebracht ist, durch den nicht eigens gezeigte Gegenstände, insbesondere Fahrzeugkarosserien, im Durchlauf hindurchgefördert werden. Hierzu umfasst der Trockner 12 ein an und für sich bekanntes Fördersystem für die Gegenstände bzw. für die Fahrzeugkarosserien, welches der Übersichtlichkeit halber ebenfalls nicht eigens gezeigt ist.

Dem Trockentunnel 18 wird erhitzte Luft zugeführt, um die Gegenstände bzw. eine auf diese aufgebrachte Beschichtung zu trocknen. Wenn vorliegend von "Trocknen" die Rede ist, so sind damit alle Vorgänge gemeint, bei denen die Beschichtung der Gegenstände, insbesondere ein Lack, zum Aushärten gebracht werden kann, sei dies nun durch Austreiben von Lösemitteln oder durch Vernetzung der Beschichtungssubstanz.

Die für die Trocknung notwendige Temperatur wird im Trockentunnel 18 durch wenigstens ein Heizaggregat 20 aufrechterhalten. Figur 1 zeigt lediglich ein einziges Heizaggregat 20; in der Praxis sind entlang des Trockentunnels 18 mehrere baugleiche Heizaggregate 20 angeordnet, die jeweils einem Abschnitt des Trockentunnels 18 zugeordnet sind, die jedoch baulich nicht voneinander getrennt sind. Der Abschnitt, der dem gezeigten Heizaggregat 20 zugeordnet ist, ist mit T bezeichnet. Die Heizaggregate 20 sind als kompakte Gasbrennereinheiten entlang des Trockentunnels 18 angeordnet und bilden auf diese Weise ein Brennersystem 22.

Dem Heizaggregat 20 wird Tunnelluft durch einen Luftauslass 24 des zugehörigen Tunnelabschnitts T zugeführt. Der Luftauslass 24 ist mit einer Nutzluftleitung 26 verbunden, in welcher ein Fördergebläse 28 angeordnet ist.

Ein Abschnitt der Nutzluftleitung 26 bildet eine Wärmetauscherschlange 30 eines Wärmetauschers 32. Die Nutzluftleitung 26 führt hiernach zu einer Verteilereinrichtung 34, welche den aus der Nutzluftleitung 26 kommenden Nutzluftstrom in einen Umwälzluftstrom und einen Abluftstrom aufteilt, nachdem die Nutzluft die Wärmetauscherschlange 30 passiert hat.

Die Umwälzluft wird durch einen mit einer Lufteinlassleitung 36 verbundenen Lufteinlass 38 wieder in den zugehörigen Tunnelabschnitt T des Trockentunnels 18 eingeblasen. Die Abluft dient als Brennerluft für eine Brennereinheit 40 mit einem Gasbrenner 42 dem die Abluft als Brennerluftstrom über eine Brennerluftleitung 44 zugeführt wird.

Die Anteile des Nutzluftstromes, die als Umwälzluft wieder in den Trockentunnel 18 und die als Brennerluft zum Gasbrenner 42 geführt werden, können über ein Ventil 46 der Verteilereinrichtung 34 eingestellt werden. Der Anteil der als Brennerluft abgezweigten Tunnelluft liegt in der Größenordnung von etwa 1% der als Umluft geführten Tunnelluft, die aus dem Tunnelabschnitt T des zugehörigen Heizaggregates 20 durch den Luftauslass 24 in die Nutzluftleitung 26 strömt.

Die Verteilereinrichtung 34 und die Brennerluftleitung 44 bilden somit eine Brennerversorgungseinrichtung 48, über welche dem Gasbrenner 42 Abluft aus dem zugehörigen Tunnelabschnitt T als Brennerluftstrom zur Erzeugung eines heißen Primärgases zugeführt wird.

Dem Gasbrenner 42 wird das benötigte Brenngas aus einer Brenngasquelle 50 über eine Brenngasleitung 52 zugeführt. Der Volumenstrom des Brenngases kann mittels eines Ventils 54 eingestellt werden. Außerdem kann dem Gasbrenner 42 in an und für sich bekannter Art und Weise ergänzend Hilfsluft über eine Hilfsluftleitung 56 zugeführt werden; in an und für sich bekannter Art und Weise kann diese Hilfsluft einerseits als Zündluft dienen, wenn der Gasbrenner 42 hochgefahren wird, oder andererseits im laufenden Betrieb des Gasbrenners 42 als Kühlluft genutzt werden. Eine vorhandene Hilfsluftquelle und ein Einstellventil hierfür sind nicht eigens gezeigt.

Die Flamme des Gasbrenners 42 wird in ebenfalls an und für sich bekannter Art und Weise mit einer Überwachungseinrichtung 58 überwacht, die beim vorliegenden Ausführungsbeispiel mit einem Sensor 60 arbeitet, der als IR- oder UV-Sensor oder als lonisationssensor ausgebildet sein kann.

In dem Gasbrenner 42 werden die Lösemittel in der Abluft weitestgehend verbrannt, wobei in einer Brennkammer 62 der Brennereinheit 40 als Primärgas heiße Rauchgase entstehen. Diese heißen Rauchgase werden über eine Leitung 64 zum Wärmetauscher 32 geführt, wo sie die durch dessen Wärmetauscherschlange 30 strömende lösemittelhaltige Nutzluft erhitzen, von der folglich ein Anteil als lösemittelhaltige Brennerluft mit der im Wärmetauscher 32 erreichten Temperatur in den Gasbrenner 42 einströmt. Beim vorliegenden Ausführungsbeispiel erreicht die Brennerluft den Gasbrenner 42 mit einer Temperatur von etwa 200 °C. Das Primärgas des Gasbrenners 42 erhitzt in dem Wärmetauscher 32 somit sowohl Umwälzluft, die dem zugehörigen Tunnelabschnitt T wieder in einem Kreislauf über den Lufteinlass 38 zugeführt wird, als auch Abluft, die dem Gasbrenner 42 als Brennerluft zugeführt wird.

Die heißen Rauchgase des Gasbrenners 42 werden nach Passieren des Wärmetauschers 32 über eine Abgasleitung 66 über Dach abgeführt, die als Sammelleitung mit den Leitungen 64 sämtlicher vorhandener Heizaggregate 20 verbunden sein kann.

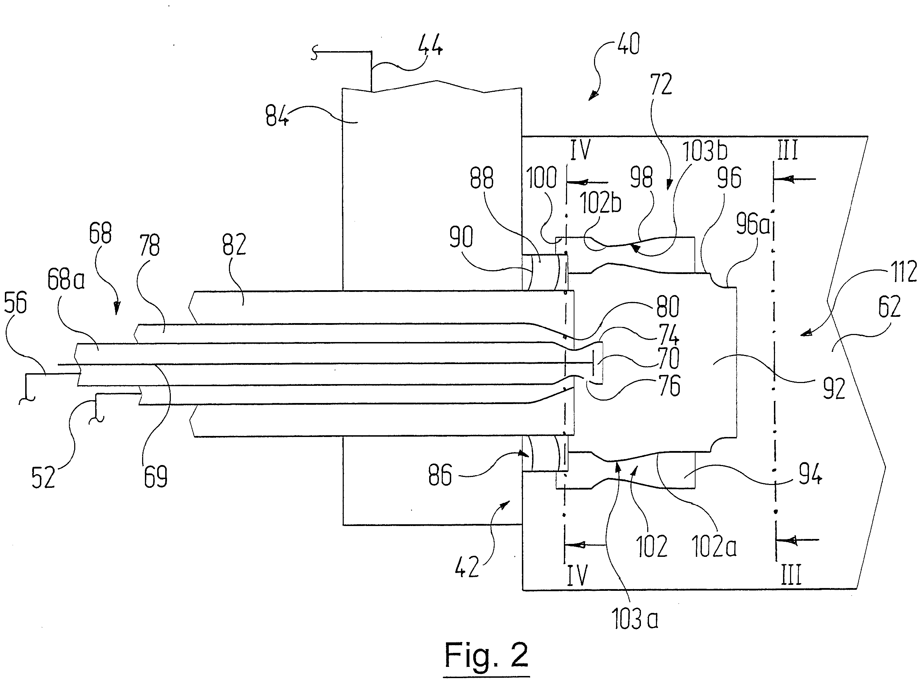

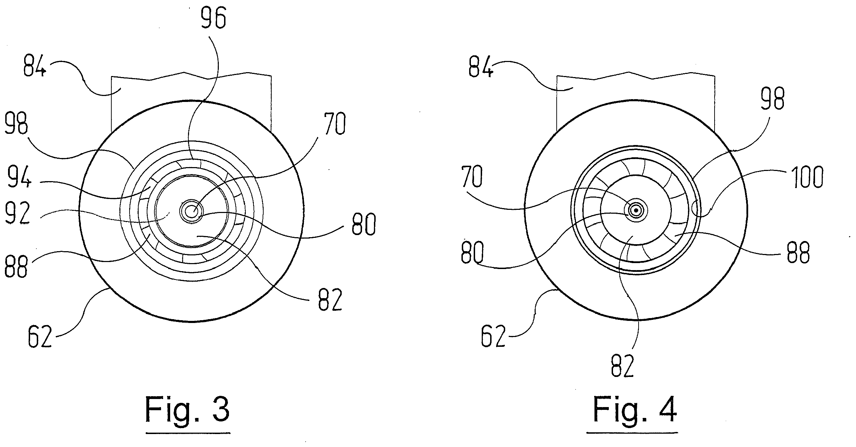

Die Luft- und Gasführung eines Gasbrenners 42 gemäß einem ersten Ausführungsbeispiel ist schematisch in den Figuren 2, 3 und 4 veranschaulicht. Dort ist mit 68 eine Gasdüse bezeichnet, die einen inneren Kanal 68a aufweist, welchem über die Hilfsluftleitung 56 mit Hilfsluft gespeist wird und diese in die Brennkammer 62 einbläst. Die Gasdüse 68 ist mit einer Zündkerze 69 bestückt. Der innere Kanal 68a der Gasdüse 68 hat ein Austrittende, dass als sich in Strömungsrichtung des Brenngases erweiternder Austrittskonus 70 gestaltet ist, der in eine Mischzone 72 der Brennkammer 62 des Gasbrenners 42 hineinragt. Der Austrittskonus 70 hat eine Konuswand 74, welche eine Durchgangsöffnung 76 aufweist.

Die Gasdüse 68 ist koaxial von einem Ringkanal 78 für Brenngas aus der Brenngasleitung 52 umgeben, welcher in einer Ringöffnung 80 am Fuße des Austrittskonus 70 der Gasdüse 68 endet.

Ein Überwachungsraum 82 für die Überwachungseinrichtung 58 umgibt seinerseits als Ringraum den Ringkanal 78 koaxial und ist zur Mischzone 72 hin offen, so dass der IR- oder UV-Sensor 60 die Verhältnisse in der Mischzone 72 erfassen kann.

Die Brennerluft gelangt über die Brennerluftleitung 44 zunächst in einen Brennkammervorraum 84, von wo sie über eine Dralleinrichtung 86 in die Mischzone 72 des Gasbrenners 42 einströmt, welche den Austrittskonus 70 der Gasdüse 68 umgibt. Durch die Dralleinrichtung 86 wird die Brennerluft vor dem Eintritt in die Mischzone 72 in Drall versetzt, wodurch gezielt Verwirbelungen und Turbulenzen erzeugt werden, um die Durchmischung der Brennerluft und des Brenngases zu fördern. Hierzu ist die Dralleinrichtung 86 als ein Flügelring 88 ausgebildet, welcher die Gasdüse 68 in Strömungsrichtung vor dem Austrittskonus 70 koaxial umgibt. Der Flügelring 88 umfasst Flügelelemente 90 bzw. Schaufelelemente, durch welche die Brennerluft beim Durchströmen des Flügelrings 88 in Drall versetzt wird. In der Praxis sind die Flügelelemente 90 derart ausgerichtet, dass die Brennerluft den Flügelring 88 mit einem Drallwinkel von 45° verlässt.

Die Mischzone 72 umfasst einen Kernbereich 92 koaxial zur Gasdüse 68 und einen diesen Kernbereich 92 koaxial umgebenden Durchströmungsraum in Form eines Ringraumes 94, wozu in der Mischzone 72 eine innere Ringwand 96 und eine äußere Ringwand 98 vorhanden sind. Durch die innere Ringwand 96 wird die Brennerluft, die durch den Flügelring 88 geströmt ist, aufgeteilt. Die Ringwand 96 definiert somit eine Einrichtung, durch welche die Brennerluft in Primärluft und Sekundärluft aufgeteilt wird. Ein Teil der Brennerluft gelangt so als Primärluft in den Kernbereich 92, wo sie unmittelbar mit dem Brenngas zu einem Primärluft/Brenngas-Gemisch vermischt wird. Der andere Teil strömt als Sekundärluft in den Ringraum 94 der Mischzone 72 ein. Dabei sind die Abmessungen und Dimensionen der beteiligten Komponenten derart, dass das Verhältnis von Primärluft zu Sekundärluft zwischen 1:3 und 3:1 liegt. Das Primärluft/Brenngas-Gemisch wird in die Brennkammer 62 geleitet, wo in einem Verbrennungsprozess Rauchgase entstehen.

Die den Kernbereich 92 begrenzende innere Ringwand 96 erstreckt sich am von der Gasdüse 68 abliegenden Ende weiter in die Brennkammer 62 hinein als die äußere Ringwand 98, so dass dort ein Ringabschnitt 96a der inneren Ringwand 96 über die äußere Ringwand 98 übersteht.

Dieser Ringabschnitt 96a weist eine nach radial innen gerichtete Ringschulter auf, wodurch sich der Durchgangsquerschnitt des Kernbereichs 92 am durch den Ringabschnitt 96a definierten Austrittsende bezogen auf den mittleren Durchgangsquerschnitt des Kernbereichs 92 in dessen übrigem Bereich verkleinert. Der Ringraum 94 steht darüber hinaus über einen Ringspalt 100 mit der Brennkammer 62 des Gasbrenners 42 in Verbindung und stellt dadurch eine Rauchgasrückführung bereit. Wie Figur 2 zeigt, haben die innere Ringwand 96 und die äußere Ringwand 98 in Strömungsrichtung der Brennerluft eine derartige Geometrie, dass zwischen diesen eine Venturi-Ringdüse 102 mit einer ersten, radial innenliegenden Innenmantelfläche 102a entlang der inneren Ringwand 96 und mit einer zweiten, radial außenliegenden Innenmantelfläche 102b ausgebildet ist. Auf diese Weise ist beim vorliegenden Ausführungsbeispiel durch den Ringraum 94 insgesamt eine Rauchgasrückführung nach dem Venturi-Prinzip bereitgestellt. Durch die strömende Sekundärluft wird am Ringspalt 100 eine Sogwirkung erzielt, durch welche Rauchgas aus der Brennkammer 62 des Gasbrenners 42 in den Ringraum 94 eingesaugt wird, wo sich das Rauchgas mit der von dem Flügelring 88 kommenden Sekundärluft vermischt. Die Innenmantelflächen des Ringraumes 94 bilden in Strömungsrichtung jeweils ein Coanda-Profil 103a, 103b, so dass die Strömung der Sekundärluft bzw. des Sekundärluft/Rauchgas-Gemischs auf Grund des Coanda-Effektes dem Verlauf der Coanda-Profile 103a, 103b in Strömungsrichtung folgt und an den Innenmantelflächen 102a, 102b entlang strömt. Auf diese Weise wird an dem Ringspalt 100 bezogen auf die Strömungsgeschwindigkeiten der Strömungen ein größerer Unterdruck erzeugt als ohne diese Maßnahme. Hierdurch wird das Rauchgas effektiv durch den Ringspalt 100 in die Venturi-Ringdüse 102 eingesaugt und vermischt sich dort besonders effektiv mit der Sekundärluft.

Im Betrieb gelangen die jeweiligen Ströme nicht in Strömungsrichtung hintereinander in die Brennkammer 62. Vielmehr bildet das Primärluft/Brenngas-Gemisch einen Kernstrom, der von einem Ringstrom umgeben ist, der durch das in der Venturi-Ringdüse 102 resultierenden Sekundärluft/Rauchgas-Gemisch gebildet ist.

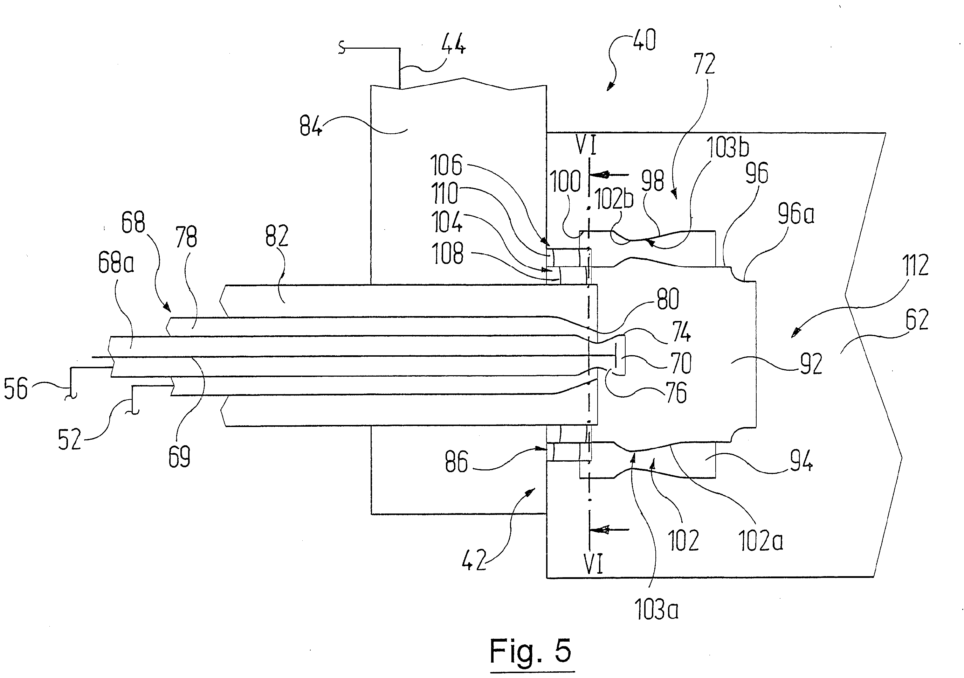

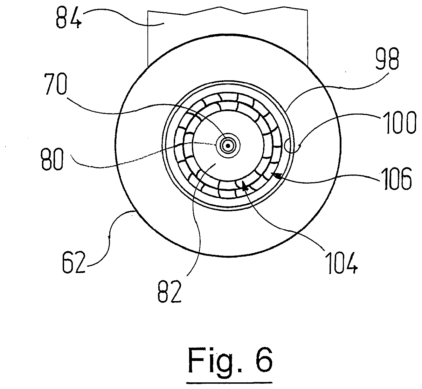

Die Figuren 5 und 6 zeigen eine Abwandlung der Brennereinheit 40. Dort umfasst die Dralleinrichtung 86 nicht einen Flügelring 88, sondern einen ersten, inneren Flügelring 104 und einen zweiten, äußeren Flügelring 106, die koaxial zur Gasdüse 68 angeordnet sind und jeweils Flügelelemente 108 bzw. 110 aufweisen.

Die Flügelringe 104, 106 sind derart angeordnet, dass der innere Flügelring 104 einzig mit dem Kernbereich 92 und der äußere Flügelring 106 einzig mit dem Ringraum 94, also mit der Venturi-Ringdüse 102 strömungstechnisch verbunden ist.

Beim vorliegenden Ausführungsbeispiel sind auch die Flügelelemente 108, 110 der beiden Flügelringe 104, 106 so ausgerichtet, dass die Brennerluft den jeweiligen Flügelring 104, 106 mit einem Drallwinkel von 45° verlässt. Bei nicht eigens gezeigten Abwandlungen können die Flügelelemente 108, 110 der Flügelringe 104, 106 jedoch auch in voneinander verschiedenen Winkelstellungen angeordnet sein, so dass die Brennerluft mit unterschiedlichen Drallwinkeln in den Kernbereich 92 und den Ringraum 94 einströmt.

Durch die Entnahme von Abluft aus dem Trockentunnel 14 über die Auslassleitungen 30 und die Aufteilung in einen Nutzluftstrom und in einen Brennerluftstrom wird zusammenfassend ein Teil der im Trockentunnel 18 umgewälzten Luft in dem Gasbrenner 42 des Heizaggregats 20 bei der Verbrennung stark erhitzt. Hierdurch wird bereits in dem Heizaggregat 20 eine Neutralisierung der in der Abluft angereicherten Schadstoffe gewährleistet. Der Gasbrenner 42 funktioniert somit als thermische Nachverbrennungseinrichtung.

Da die Brennerluft vor Erreichen des Gasbrenners 42 durch den Wärmetauscher 32 erhitzt wird, kann am jeweiligen Gasbrenner 42 Brenngas eingespart werden.

Bei beiden erläuterten Gasbrennern 42 kann diese Ersparnis bis zu 12% und im günstigen Fall bis zu 15% bezogen auf Gasbrenner betragen, deren Brennerluft nicht oder weniger stark erhitzt ist. Durch die wärmere Brennerluft steigt die Flammentemperatur, wodurch der Wirkungsgrad des Gasbrenners 42 verbessert ist.

Zwar wird dies mit höheren Werten bei den Stickoxiden NOx erkauft. Bei dem Gasbrenner 42 wird jedoch durch die Aufteilung der Mischzone 72 in den Kernbereich 92 und den Ringraum 94 mit der Rauchgasrückführung eine beträchtliche Reduktion der Stickoxide NOx erreicht. Der Sauerstoffgehalt in dem Sekundärluft-/Rauchgasgemisch, welches in dem Ringraum 94 entsteht, ist geringer als der Sauerstoffgehalt der Sekundärluft vor der Durchmischung. Durch die Rauchgasrückführung durch den Ringspalt 100 wird außerdem die Sekundärluft erwärmt und das rückgeführte Rauchgas abgekühlt; das Sekundärluft-/Rauchgasgemisch hat eine entsprechende mittlere Temperatur.

Die Verbrennung im Kernbereich 92 erfolgt zunächst unterstöchiometrisch, so dass z.B. nicht alles zunächst erzeugte Kohlenmonoxid CO mit dem durch die Primärluft zugeführten Sauerstoff O₂ zu Kohlendioxid CO₂ oxidiert und in den entstehenden Rauchgasen noch Kohlenmonoxid CO enthalten ist.

Das Sekundärluft-/Rauchgasgemisch mit einem verringerten Sauerstoffgehalt gelangt nach Durchströmen des Ringraumes 94 mit hoher Strömungsgeschwindigkeit stromab der Ringwände 96 und 98 in eine dortige Zündzone 112 der Brennkammer 62, wo es sich mit den im Kernbereich 92 aus Primärluft und Brenngas entstandenen Rauchgasen vermischt.

Das resultierende Gasgemisch zündet auf Grund der hohen Strömungsgeschwindigkeiten der Gasgemische aus dem Kernbereich 92 und aus dem Ringraum 94 erst in dieser Zündzone 112. Die Strömungsgeschwindigkeit der Brennerluft aus der Brennerluftleitung 44 kann ergänzend durch das Fördergebläse 28 eingestellt werden.

Durch die integrierte Rauchgasrückführung durch den Ringspalt 100 und die simultane Durchströmung des Gasbrenners 42 von Primärluft und Sekundärluft/Rauchgas wird schon bei geringer Brennerleistung eine Geschwindigkeit des Sekundärluft-/Rauchgasgemisches erreicht, durch welche ein flammenloser Betrieb des Gasbrenners 42 erreicht wird. Dieser flammenlose Betrieb kann sowohl in einer oxidierenden als auch in einer reduzierenden Atmosphäre aufrechterhalten werden.

Wenn der Gasbrenner 42 in Betrieb genommen wird, wird zunächst der Hilfsluftstrom aus der Hilfsluftleitung 56 und der Brenngasstrom aus der Brenngasleitung 52 aktiviert. Brenngas aus dem Ringkanal 78 gelangt durch die Durchgangsöffnung 76 des Austrittskonus 70 zur Zündkerze 69, wo es sich mit der Hilfsluft vermischt. Die Zündkerze 69 wird aktiviert und das Gasgemisch entzündet sich.

Der Brennerluftstrom aus der Brennerluftleitung 44 wird mit Hilfe des Fördergebläses 28 und des Ventils 44 der Verteilereinrichtung 34 eingestellt. Bei den anfänglichen Strömungsgeschwindigkeiten entsteht zunächst eine hochturbulente Flamme. Im weiteren Betriebsverlauf steigt die Strömungsgeschwindigkeit durch die Rauchgasrückführung über die Dralleinrichtung 86 an, bis die Zündung der Flamme in der Zündzone 112 erfolgt; der Gasbrenner 42 arbeitet dann flammenlos.

Bei dem erläuterten Konzept strömt die Brennerluft nicht unmittelbar in die Brennkammer 62 ein; die Brennerluftleitung 44 bzw. der Brennkammervorraum 84 stehen nicht unmittelbar mit der Brennkammer 62 in Verbindung. Hierdurch ergibt sich insgesamt eine Geräuschreduktion gegenüber einer direkten Beaufschlagung der Brennkammer 62 mit Brennerluft, wie es im Stand der Technik bekannt ist.

Das Sekundärluft-/Rauchgasgemisch dient als Sauerstofflieferant für das noch vorhanden Kohlenmonoxid CO, welches nun bei relativ niedriger Temperatur vollständig zu CO₂ oxidiert wird, wobei nur geringe Mengen Stickstoffmonoxid NO entstehen, so dass in der Folge auch nur wenige Stickoxide NOx erzeugt werden.

Insgesamt werden bei dieser Brennerausbildung hervorragende Werte bei Kohlenmonoxid CO und Stickoxiden NOx bei einem Sauerstoffanteil von höchstens 2,5% bis 3% erreicht. Die Werte der Stickoxide NOx können dabei weniger als 50 mg/m³ betragen und es können CO-Werte von weniger als 8 mg/m³ bei 2,5 % bis 3% Sauerstoff O₂ erreicht werden.

Die Brennereinheit 40 folgt einem Fett-Mager-Brenngasmischkonzept, bei dem die Zündzone 112 der Brennkammer 62 einen Fettbereich der Brennkammer 62 und der Kernbereich 92 der Mischzone 72 sowie die Venturi-Ringdüse 102 einen Magerbereich der Brennkammer 62 definieren.

Im Fettbereich, d.h. in der Zündzone 112, wird das Gasgemisch auf ein Verbrennungsluftverhältnis λ von 0,3 bis 0,8 gebracht. Die Brennerluft, d.h. hier nun die Primärluft, wird, wie oben erläutert, durch die Dralleinrichtung 86 in Drall versetzt und das Brenngas durch die Gasdüse 68 zugegeben.

Im Magerbereich, d.h. in dem Kernbereich 92, wird das Gemisch aus Primärluft und Brenngas gezündet und expandiert auf Grund der durch die Dralleinrichtung 86 optimierten Durchmischung blitzartig. Daher verweilen stickstoffhaltige Komponenten nur sehr kurz im Kernbereich 92.

Die erforderliche, noch kalte Sekundärluft strömt, ebenfalls durch die Dralleinrichtung 86 in Drall versetzt, in die Venturi-Ringdüse 102 ein, wo sie sich mit dem sauerstoffarmen Rauchgas aus der Brennkammer 62 vermischt. Das entstehende Sekundärluft/Rauchgas-Gemisch ist gegenüber der reinen Brennerluft abgereichert und enthält weniger Sauerstoff als die Brennerluft. Zudem ist das entstehende Sekundärluft/Rauchgas-Gemisch kälter als das Rauchgas.

In der Zündzone 112 gelangen nun der Kernstrom aus dem Primärluft/Brennergas-Gemisch und der Ringstrom aus dem Sekundärluft/Rauchgas-Gemisch zueinander, wo das hochaktive, expandierende Primärluft/Brenngas-Gemisch mit dem umgebenden Ringstrom reagiert, wobei die Reaktion effektiv abläuft und die Gase sich mit hoher Geschwindigkeit und ohne lokale Zündzentren, d.h. ohne sogenannte "Hot-Spots", in der Brennkammer 62 verteilen.

Die Oxidationsprozesse des Kernstroms aus dem Primärluft/Brenngas-gemisch und des Ringstroms aus dem Sekundärluft/Rauchgas-Gemisch verschmelzen in gewisser Weise, so dass die Reaktionen weitgehend gleichzeitig in der gesamten Brennkammer 62 ablaufen. Anders als bei bekannten Brennereinheiten gibt es keine oder zumindest fast keine Luft-Brenngasgrenzen, welche die Effektivität und die Emissionswerte beeinflussen.

Durch die resultierende gleichmäßige Verteilung des Reaktionsablaufs innerhalb der Brennkammer 62 erfolgt die Verbrennung ohne erkennbar sichtbare Flamme. In der Praxis ist in der Brennkammer 62 lediglich ein abhängig von der Brennerleistung mehr oder minder helles Leuchten ohne die erwähnten "Hot-Spots" zu erkennen.

Da ein Anteil der aus dem Trockentunnel 18 entnommenen Abluft als Verbrennungsluft für die Gasbrenner 42 genutzt wird, wird der Anteil der Tunnelluft, die als Abluft zur eingangs erwähnten übergeordneten Nachverbrennungseinrichtung geführt werden muss, um den entsprechenden Anteil verringert. Hierdurch wird der Beitrag der Nachverbrennung geringer und der Gasverbrauch für die Nachverbrennungseinrichtung kann insgesamt gesenkt werden.

Insgesamt wird auch der Anteil an Abgasen reduziert, der an die Atmosphäre über Dach abgegeben wird.

Die oben erläuterte Brennereinheit 40 kann auch autark als eigenständige Brennereinheit und damit als Energiequelle verwendet werden, ohne das damit Abluft oder dergleichen verbrannt wird. In diesem wird dem der Brennereinheit 40 über die Brennerluftleitung 44 keine Abluft oder dergleichen zugeführt, sondern Frischluft.

## Patentansprüche

1. Brennereinheit (40), insbesondere zum Verbrennen von Abluft, mit
a) einer Brennkammer (62), in welcher Rauchgase entstehen;
b) einem Gasbrenner (42), welchem über eine Brenngasleitung (52) Brenngas und über eine Brennerluftleitung (44) Brennerluft, insbesondere als Brennerluft dienende Abluft, zuführbar ist;
c) einer Einrichtung (96), durch welche die Brennerluft in Primärluft und Sekundärluft geteilt wird;
d) einer Mischzone (72), in welcher die Primärluft mit dem Brenngas zu einem Primärluft/Brenngas-Gemisch vermischt wird, wobei das Primärluft/Brenngas-Gemisch der Brennkammer (62) zugeführt wird;
e) einer Rauchgasrückführung, welche einen Durchströmungsraum umfasst, der mit der Brennkammer (62) verbunden ist, und in welchem die Sekundärluft mit in der Brennkammer (62) entstandenen Rauchgasen zu einem Sekundärluft/Rauchgas-Gemisch vermischt wird;
f) einer Einrichtung, mittels welcher das Sekundärluft/Rauchgas-Gemisch dem Primärluft/Brenngas-Gemisch in der Brennkammer (62) zugeführt wird;
**dadurch gekennzeichnet, dass**
g) die Innenmantelflächen des Durchströmungsraumes in Strömungsrichtung ein Coanda-Profil (103a, 103b) ausbilden;
h) der Durchströmungsraum als Ringraum (94) ausgebildet ist, der einen Kernbereich (92) der Mischzone (72) der Brennkammer (62) umgibt, wobei die Primärluft mit dem Brenngas in dem Kernbereich (92) vermischt wird;
i) der Ringraum (94) eine Venturi-Ringdüse (102) bildet, wobei die Einrichtung, mittels welcher das Sekundärluft/Rauchgas-Gemisch dem Primärluft/Brenngas-Gemisch in der Brennkammer (62) zugeführt wird, diese Venturi-Düse (102) umfasst.

2. Brennereinheit nach Anspruch 1, **dadurch gekennzeichnet, dass** die Einrichtung (96), durch welche die Brennerluft in Primärluft und Sekundärluft aufgeteilt wird, durch die radial innere Ringwand (86) des Ringraumes (94) ausgebildet ist.

3. Brennereinheit nach Anspruch 1 oder 2, **dadurch gekennzeichnet, dass** eine Dralleinrichtung (86) vorgesehen ist, durch welche Primärluft vor dem Eintritt in den Kernbereich (92) in Drall versetzbar ist und/oder durch welche Sekundärluft vor dem Eintritt in den Ringraum (94) in Drall versetzbar ist.

4. Brennereinheit nach Anspruch 3, **dadurch gekennzeichnet, dass** die Dralleinrichtung (86) als Flügelring (88) ausgebildet ist.

5. Brennereinheit nach Anspruch 4, **dadurch gekennzeichnet, dass** der Flügelring (88) die Brennerluftleitung (44) mit dem Ringraum (94) und mit dem Kernbereich (92) der Mischzone (72) verbindet.

6. Vorrichtung zum Temperieren von Gegenständen, insbesondere zum Trocknen von beschichteten Fahrzeugkarosserien, mit
a) einem Temperiertunnel (16), welcher in einem Gehäuse (14) untergebracht ist und wenigstens einen Tunnelabschnitt (T) definiert, der wenigstens einen Luftauslass (24) und wenigstens einen Lufteinlass (38) umfasst;
wobei
b) dem Tunnelabschnitt (T) ein Heizaggregat (20) zugeordnet ist, in welchem mittels einer Brennereinheit (40) ein heißes Primärgas erzeugbar ist;
**dadurch gekennzeichnet, dass**
c) die Brennereinheit (40) eine Brennereinheit (40) nach einem der Ansprüche 1 bis 5 ist.

## Claims

1. A burner unit (40), especially for the combustion of exhaust air, comprising
a) a combustion chamber (62) in which flue gases are produced;
b) a gas burner (42) to which, via a combustion gas line (52), combustion gas can be supplied and, via a feed air line (44), feed air, in particular exhaust air serving as feed air, can be supplied;
c) a device (96) by means of which the feed air is divided into primary air and secondary air;
d) a mixing zone (72), in which the primary air is mixed with the combustion gas to form a primary air / combustion gas mixture, wherein the primary air / combustion gas mixture is supplied to the combustion chamber (62);
e) a flue gas recirculation system, which comprises a through-flow chamber, which is connected to the combustion chamber (62), and in which the secondary air is mixed with the flue gases occurring in the combustion chamber (62) to form a secondary air / flue gas mixture;
f) a device, by means of which the secondary air / flue-gas mixture is supplied to the primary air / combustion gas mixture in the combustion chamber (62);
**characterized in that**
g) the internal cylindrical surfaces of the through-flow chamber form a Coanda profile (103a, 103b) in the direction of flow;
h) the through-flow chamber is formed as an annular space (94), which surrounds a core area (92) of the mixing zone (72) of the combustion chamber (62), wherein the primary air is mixed with the combustion gas in the core area (92);
i) the annular space (94) forms a Venturi ring nozzle (102), wherein the device, by means of which the secondary air / flue-gas mixture is supplied to the primary air / combustion gas mixture in the combustion chamber (62), comprises said Venturi ring nozzle (102).

2. The burner unit according to patent claim 1, **characterized in that** the device (96) through which the feed air is divided into primary air and secondary, is formed by the radially inner annual wall (86) of the annular space (94).

3. The burner unit according to patent claim 1 or 2, **characterized in that** a swirl device (86) is provided through which a swirling movement can be induced into the primary air prior to entering the core area (92) and / or through which a swirling movement can be induced into the secondary air prior to entering the annular space (94).

4. The burner unit according to patent claim 3, **characterized in that** the swirl device (86) is formed as a wing ring (88).

5. The burner unit according to patent claim 4, **characterized in that** the wing ring (88) connects the feed air line (44) with the annular space (94) and the core area (92) of the mixing zone (72).

6. A device for the temperature control of objects, in particular for drying painted vehicle bodies, comprising
a) a temperature-control tunnel (16), which is accommodated in a housing (14) and defines at least one tunnel section (T) comprising at least one air outlet (24) and at least one air inlet (38);
wherein
b) a heating assembly (20), in which a hot primary gas can be generated by means of a burner unit (40), is associated with the tunnel section (T);
**characterized in that**
c) the burner unit (40) is a burner unit (40) according to any one of patent claims 1 to 5.

## Revendications

1. Unité brûleur (40), servant en particulier à la combustion d'air d'évacuation, comportant
a) une chambre de combustion (62) dans laquelle des gaz de fumée sont produits;
b) un brûleur à gaz (42) pouvant être alimenté en gaz combustible par le biais d'une conduite de gaz combustible (52) et en air de combustion par le bais d'une conduite d'air de combustion (44), en particulier de l'air d'évacuation servant d'air de combustion;
c) un dispositif (96), par lequel l'air de combustion est séparé en de l'air primaire et de l'air secondaire.
d) une zone de mélange (72), dans laquelle l'air primaire est mélangé avec le gaz combustible pour former un mélange air primaire/gaz combustible, dans lequel le mélange air primaire/gaz combustible est acheminé jusqu'à la chambre de combustion (62);
e) un retour de gaz de fumée comportant une chambre d'écoulement, qui est reliée à la chambre de combustion (62), et dans laquelle l'air secondaire est mélangé avec les gaz de fumée produits dans la chambre de combustion (62) pour former un mélange air secondaire/gaz de fumée;
f) un dispositif, par l'intermédiaire duquel le mélange air secondaire/gaz de fumée est acheminé jusqu'au mélange air primaire/gaz combustible dans la chambre de combustion (62);
**caractérisé en ce que**
g) les surfaces d'enveloppe intérieure de la chambre d'écoulement forme un profil Coanda (103a, 103b) dans la direction d'écoulement;
h) la chambre d'écoulement est formée en tant qu'espace annulaire (94) entourant une zone centrale (92) de la zone de mélange (72) de la chambre de combustion (62), dans laquelle l'air primaire est mélangé avec le gaz combustible dans la zone centrale (92);
i) l'espace annulaire (94) forme une buse annulaire Venturi (102), dans lequel le dispositif, par l'intermédiaire duquel le mélange air secondaire/gaz de fumée est acheminé au mélange air primaire/gaz combustible dans la chambre de combustion (62), comporte ladite buse Venturi (102).

2. Unité brûleur selon la revendication 1, **caractérisée en ce que** le dispositif (96), par l'intermédiaire duquel l'air de combustion est séparé en de l'air primaire et de l'air secondaire, est formé par la paroi annulaire radialement intérieure (86) de l'espace annulaire (94).

3. Unité brûleur selon la revendication 1 ou 2, **caractérisée en ce que** un dispositif de tourbillonnement (86) est prévu, par l'intermédiaire duquel de l'air primaire peut être mis en tourbillon avant l'entrée dans la zone centrale (92) et / ou par l'intermédiaire duquel de l'air secondaire peut être mis en tourbillon avant l'entrée dans l'espace annulaire (94).

4. Unité brûleur selon la revendication 3, **caractérisée en ce que** le dispositif de tourbillonnement (86) est formé en tant qu'anneau à ailes (88).

5. Unité brûleur selon la revendication 4, **caractérisée en ce que** l'anneau à ailes (88) relie la conduite d'air de combustion (44) avec l'espace annulaire (94) et la zone centrale (92) de la zone de mélange (72).

6. Dispositif de mise en température d'objets, en particulier pour le séchage de carrosseries de véhicules recouvertes d'un revêtement, comportant
a) un tunnel de mise en température (16), qui est placé dans une caisse (14) et définit au moins une partie de tunnel (T) qui comprend au moins une sortie d'air (24) et au moins une entrée d'air (38);
dans lequel
b) un appareil de chauffage (20), dans lequel un gaz primaire chaud peut être produit au moyen d'une unité brûleur (40), est associé à la partie de tunnel (T);
**caractérisé en ce que**
c) l'unité brûleur (40) est une unité brûleur (40) selon l'une quelconque des revendications 1 à 5.
